# DEMANDE DE BREVET EUROPEEN

(11) **EP 0 779 182 A1**
(43) Date de publication de la demande: **18.06.1997**
(21) Numéro de dépôt: 96402680.1
(22) Date de dépôt: 10.12.1996
(51) Int. Cl.: B60R 16/02

(54) **Perfectionnement aux contacteurs electriques tournants**

(30) Priorité: 12.12.1995 FR 9514689
(71) Demandeur: MAGNETI MARELLI FRANCE, 92000 Nanterre (FR)
(72) Inventeur: Gauthier, Christian, 92200 Neuilly-sur-Seine (FR)
(74) Mandataire: Texier, Christian

(57) **Abrégé**

La présente invention concerne un contacteur électrique tournant, notamment pour colonne de direction de véhicules automobiles, comprenant deux éléments (100, 200) susceptibles de rotation relative, un conducteur souple (300) placé entre ces deux éléments et une lame élastique (400) fixée par une zone d'ancrage (418, 420) sur un élément (200) du contacteur et possédant au moins une zone de verrouillage (430) éloignée de la zone d'ancrage et placée en regard du second élément (100), de sorte qu'au repos, en dehors de son environnement d'utilisation, la lame (400) repose sur le second élément (100) pour interdire toute rotation relative entre les éléments (100, 200), tandis qu'en position installée, une sollicitation de la lame (400) par cet environnement écarte celle-ci du second élément (100) pour autoriser une rotation relative, caractérisé par le fait que la lame (400) possède une forme incurvée de sorte que la sollicitation de la lame (400) par son environnement déforme la lame vers une position plus aplatie, et entraîne un allongement de la distance séparant la zone d'ancrage (418, 420) et la zone de verrouillage (430).

## Description

La présente invention concerne le domaine des contacteurs électriques tournants.

Plus précisément, la présente invention concerne les contacteurs du type comprenant :
- un premier élément de boîtier fixe,
- un second élément de boîtier mobile à rotation par rapport au premier élément de boîtier fixe, et
- un organe conducteur électrique souple placé entre l'élément fixe et l'élément mobile du boîtier et relié à ceux-ci.

La présente invention trouve notamment, mais non exclusivement, application à la transmission de signaux électriques entre des moyens liés au volant d'un véhicule automobile, par exemple un système de gonflage de sac de protection type airbag, et des moyens de commande indépendants du volant liés à la colonne de direction.

De nombreux contacteurs électriques tournants du type rappelé ci-dessus ont déjà été proposés.

On peut trouver par exemple un descriptif général de ces contacteurs dans les documents GB-A-869275, GB-A-2216476, US-A-3525536, FR-A-2494922, FR-A-2667457, US-A-4789342, US-A-4540223, FR-A-2667458, FR-A-2667456, FR-A-2477789, DE-A-751684, FR-A-2249458, GB-A-2164506, CH-A-167629, US-A-4422699, US-A-4836795, DE-A-3041258, US-A-4451105, US-A-3525536, US-A-4722690, US-A-4875860.

L'homme de l'art sait qu'il est nécessaire de contrôler avec précision le positionnement relatif entre les éléments de boîtier, pour permettre une installation du contacteur dans une position qui coïncide avec la position des roues du véhicule.

Pour résoudre le problème ainsi posé, il a été proposé d'équiper les contacteurs électriques tournants d'un élément élastique, sollicité à déplacement lors de la mise en place ou du retrait du contacteur sur son site d'utilisation, de sorte que l'élément élastique permette, après installation, ou interdise, avant la pose ou après un retrait, une rotation relative entre les deux éléments de boîtier.

Un exemple de contacteur électrique tournant équipé d'un tel élément élastique est donné dans le document WO-A-9117592.

Cependant, les solutions actuelles ne donnent pas totalement satisfaction. Elles sont en effet complexes et exigent une forme particulière d'un environnement du contacteur électrique tournant, pour solliciter l'élément élastique précité.

La présente invention a maintenant pour but de perfectionner les contacteurs électriques tournants.

Ce but est atteint selon la présente invention grâce à un contacteur électrique tournant comprenant :
- un premier élément de boîtier fixe,
- un second élément de boîtier mobile à rotation par rapport au premier élément de boîtier fixe,
- un organe conducteur électrique souple placé entre l'élément fixe et l'élément mobile du boîtier et relié à ceux-ci, et
- une lame élastique fixée par une zone d'ancrage sur un élément du contacteur et possédant au moins une zone de verrouillage éloignée de la zone d'ancrage et placée en regard du second élément, de sorte qu'au repos, en dehors de son environnement d'utilisation, la lame repose sur le second élément pour interdire toute rotation relative entre les deux éléments de boîtier, tandis qu'en position installée, sous la sollicitation par son environnement, la lame soit écartée du second élément pour autoriser une rotation relative entre les deux éléments,
caractérisé par le fait que la lame élastique est de configuration incurvée de sorte que la sollicitation de la lame par son environnement d'utilisation entraîne une déformation de la lame par allongement de la distance séparant la zone d'ancrage et sa zone de verrouillage en regard du second élément.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 représente une vue schématique en coupe axiale d'un contacteur électrique tournant conforme à la présente invention, en position de verrouillage,
- la figure 2 représente une vue en perspective du même contacteur,
- la figure 3 représente une vue partielle en coupe transversale du contacteur électrique tournant conforme à la présente invention,
- la figure 4 représente une vue similaire d'une variante de réalisation conforme à l'invention,
- la figure 5 représente une vue schématique en perspective d'une lame de verrouillage conforme à la présente invention,
- les figures 6 et 7 représentent des vues respectivement de dessus et en coupe longitudinale de la même lame, et
- les figures 8 et 9 représentent des vues schématiques en coupe axiale de deux variantes de contacteurs électriques tournants conformes à la présente invention.

La structure générale du contacteur électrique tournant conforme à la présente invention illustrée sur les figures annexées, est classique en soi : le contacteur comprend un premier élément 100 de boîtier fixe, un second élément 200 de boîtier mobile à rotation autour d'un axe O-O par rapport au premier élément 100 de boîtier fixe, et un organe conducteur électrique 300 souple placé entre l'élément fixe 100 et l'élément mobile 200 du boîtier et relié à ceux-ci. La structure générale de ce contacteur ne sera donc pas décrite plus en détail par la suite.

Comme on l'a indiqué précédemment, selon l'invention, il est prévu en outre une lame élastique 400 conçue pour verrouiller en position relative les éléments 100 et 200 précités avant installation du contacteur ou après retrait de celui-ci. En d'autres termes, avant installation, la lame 400 interdit toute rotation relative entre les éléments 100, 200 autour de l'axe O-O.

Selon l'invention, la lame 400 est incurvée.

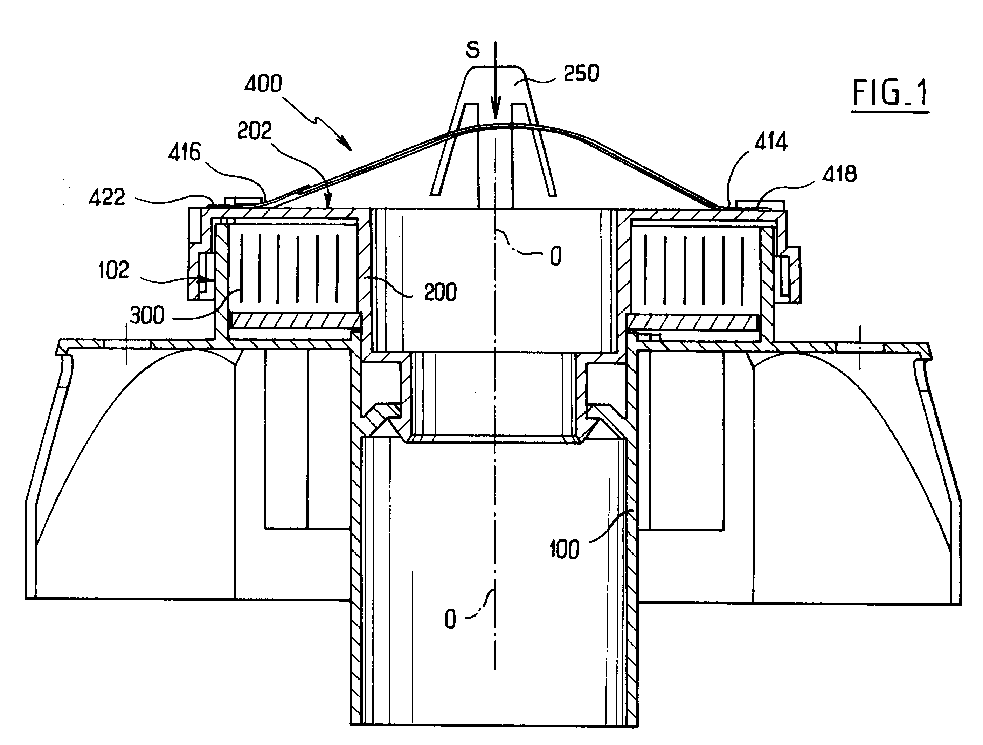

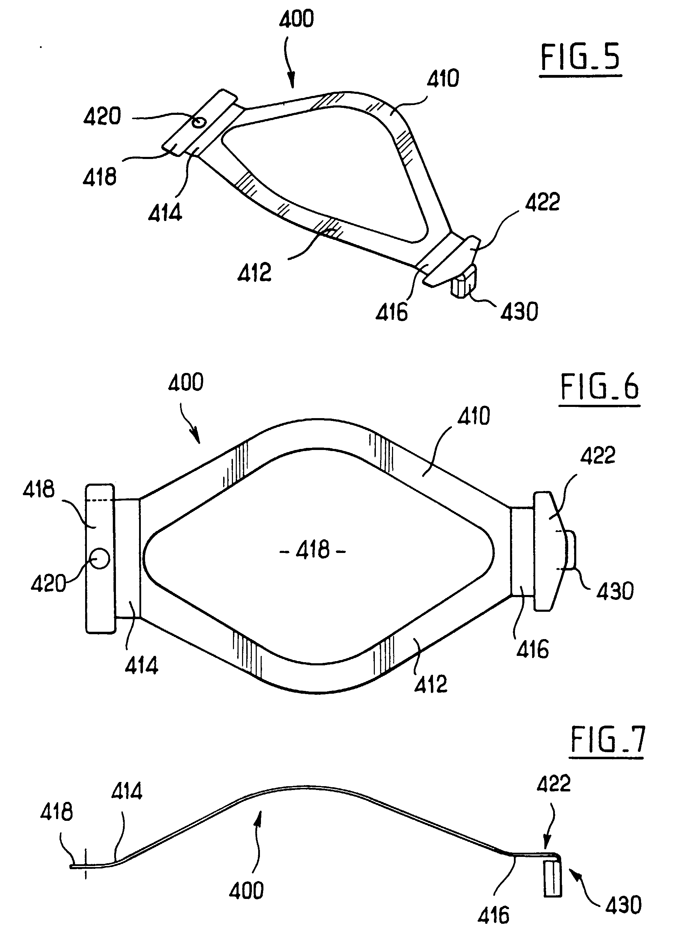

Plus précisément, selon le mode de réalisation préférentiel illustré sur les figures 1 à 7, la lame 400, en vue latérale, soit dans un plan parallèle à l'axe O-O, a la configuration d'une ondulation similaire à une arche de sinusoïde.

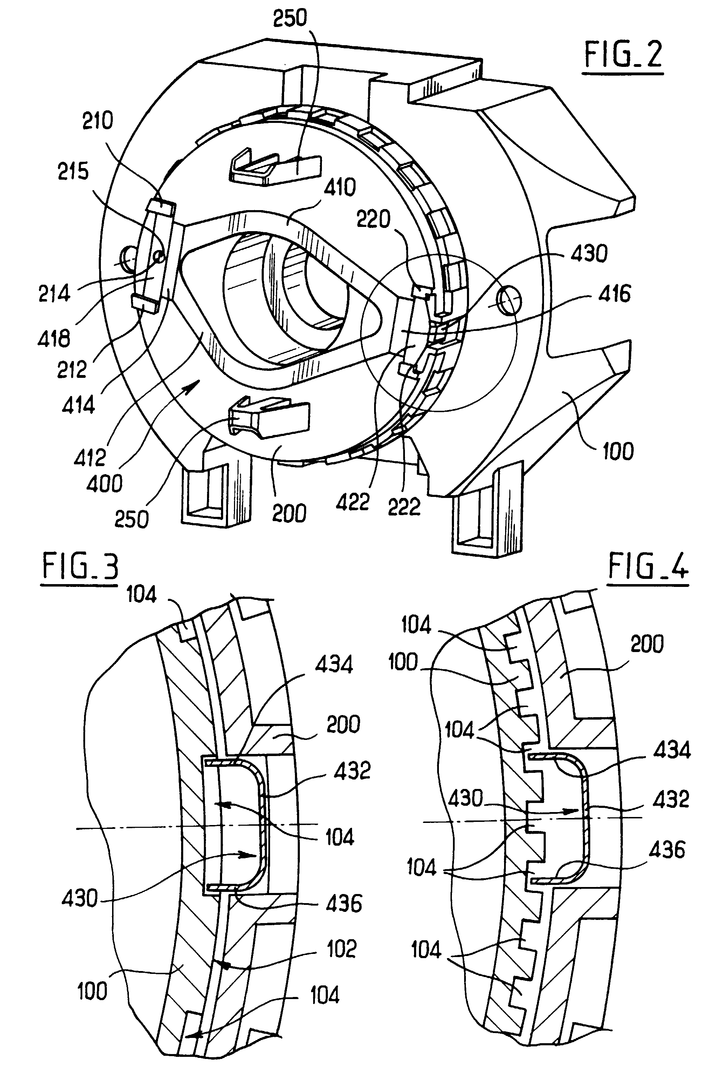

Plus précisément encore, comme on le voit notamment sur les figures 2, 5 et 6, la lame 400 est composée de deux branches 410, 412 symétriques par rapport à un plan axial passant par l'axe O-O. Chacune des branches 410, 412 est incurvée en forme d'arche de sinusoïde dans une projection dans le plan axial passant par l'axe O-O précité. Cependant, en outre, vu dans un plan perpendiculaire à l'axe O-O, chacune des branches 410, 412 est également incurvée concave vers l'axe O-O. Les branches 410, 412 sont reliées à leurs extrémités sous forme de facettes 414, 416 perpendiculaires à l'axe O-O.

Les deux branches 410, 412 ménagent ainsi entre elles une lumière 418 permettant le passage de l'arbre de direction.

La lame 400 repose par ces facettes d'extrémité planes et parallèles entre elles 414, 416 sur une face 202 de l'un des éléments, par exemple l'élément mobile 200, perpendiculaire à l'axe 0-0.

La lame 400 est fixée par une première extrémité 414 sur l'élément précité 200. De nombreux moyens peuvent être prévus à cet effet pour fixer l'extrémité 414 de la lame 400 sur l'élément 200.

Selon le mode de réalisation préférentiel illustré sur les figures annexées, la facette 414 précitée assurant la liaison entre les branches 410, 412 est prolongée vers l'extrémité libre de la lame 400 par une barrette 418 de plus grande largeur munie en son centre d'un perçage traversant 420.

Par ailleurs, l'élément 200 est muni, au voisinage de sa périphérie, et sur sa face 202 précitée, de deux nervures 210, 212 en porte-à-faux, et d'un pion 214 en saillie. La distance séparant les bases de nervures en porte-à-faux 210, 212 est complémentaire de la largeur de la barrette 418. Le pion 214 est situé à équidistance des nervures 210, 212 et son diamètre est complémentaire du perçage 420. Ainsi, comme on le voit notamment sur la figure 2, la barrette 418 est conçue pour être engagée sous les nervures 210, 212 en porte-à-faux, le pion 214 étant engagé dans le perçage 420.

A cette fin, de préférence, le pion 214 est muni d'un biseau ou chanfrein 215 facilitant l'engagement de la barrette 418 sur le pion précité, lequel chanfrein 215 vient affleurer la surface de l'élément 200.

Comme on le voit sur la figure 2, les deux nervures 210, 212 parallèles entre elles sont orientées dans une direction générale radiale par rapport à l'axe O-O.

La longueur de la lame 400, c'est-à-dire la distance séparant au repos ses extrémités 416, 414, étant sensiblement égale au diamètre de l'élément 200, on comprend que la seconde extrémité 416 de la lame 400 est placée en regard de la périphérie de l'élément 200 diamétralement opposée à la zone de fixation précitée définie par les nervures 210, 212 et le pion 214.

Cette seconde extrémité 416 de la lame 400 est guidée à translation radiale sur l'élément 200.

Là encore de nombreux moyens peuvent être prévus pour assurer ce guidage radial de la seconde extrémité 416 de la lame 400.

Selon le mode de réalisation illustré sur les figures annexées, la facette 416 précitée est prolongée radialement vers l'extérieur par une barrette 422 de plus grande largeur, laquelle est conçue pour être engagée sous une seconde paire de nervures en porte-à-faux 220, 222 formée en saillie sur la face 202 de l'élément 200.

Là encore, les nervures en porte-à-faux 220, 222 sont parallèles entre elles et orientées dans une direction générale radiale par rapport à l'axe O-O. La barrette 422 est elle-même prolongée par une dent de verrouillage 430 conçue pour coopérer avec l'élément 100.

Selon le mode de réalisation illustré sur les figures annexées, la dent de verrouillage 430 s'étend dans une direction générale axiale, c'est-à-dire parallèlement à l'axe O-O. Elle est placée en regard d'une surface périphérique 102 de l'élément 100. Plus précisément encore, selon le mode de réalisation particulier illustré sur les figures annexées, la dent de verrouillage 430 présente une section droite en U considérée dans un plan perpendiculaire à l'axe O-O. Sur les figures annexées, l'âme centrale de cette dent en U 430 est référencée 432, tandis que ses deux ailes latérales parallèles entre elles sont référencées 434, 436.

De préférence, la surface périphérique 102 précitée de l'élément 100 est munie d'une série de cannelures 104 répartie angulairement autour de l'axe O-O.

Ces cannelures 104 peuvent faire l'objet de plusieurs variantes.

Comme illustré sur la figure 3, la largeur périphérique des cannelures 104 peut être complémentaire de la largeur périphérique de la dent de verrouillage 430. C'est-à-dire que dans ce cas, chaque cannelure 104 est adaptée pour recevoir intégralement la denture 430, plus précisément les deux ailes 434, 436 de celle-ci.

Selon une variante, comme illustré sur la figure 4, les cannelures 104 peuvent présenter une largeur périphérique très inférieure à celle de la denture 430, de sorte que chaque cannelure 104 ne reçoive qu'une seule aile 434, 436. Cette disposition améliore le verrouillage obtenu entre les éléments 100 et 200. En effet, elle limite les risques de déformation des ailes 434, 436, celles-ci étant prises en cisaillement entre les éléments 100 et 200.

Sur les figures annexées, on a référencé 250 des structures formées en saillie sur la face 202 de l'élément 200 pour assurer une liaison d'entraînement entre l'élément mobile 200 et le volant d'un véhicule.

Le fonctionnement du dispositif qui vient d'être décrit est le suivant.

Avant installation sur une colonne de direction, la dent 430 de la lame 400 liée à l'élément 200 est engagée dans les cannelures 104 de l'élément 100. Dans cette position, les éléments 100 et 200 sont interdits de rotation relative.

En revanche, lors de l'installation, la lame 400 est sollicitée par l'environnement du contacteur, par exemple par une face du volant transversale à l'axe O-O, ou encore par une face de même orientation liée à la colonne de direction. Plus précisément, la sollicitation est opérée sur le sommet de l'arche de chaque branche 410, 412. Cette sollicitation est schématisée sous la flêche référencée S sur la figure 1 annexée.

L'homme de l'art comprendra que cette sollicitation tend à aplanir la lame 400, et par conséquent à allonger la distance séparant les deux extrémités de la lame 400, c'est-à-dire la distance séparant la zone d'ancrage 414 et la dent de verrouillage 430. Il en résulte que suite à cette déformation, la dent de verrouillage 430 sort des cannelures 104 pour libérer l'élément 100 et autoriser une libre rotation entre les éléments 100 et 200 sous la commande du volant du véhicule. Dans un mode de réalisation préférentiel de l'invention, le matériau élastique constitutif de la lame 400 est tel que la lame reprend sa forme initiale lorsque le contacteur est désolidarisé de son environnement d'utilisation.

Bien entendu la présente invention n'est pas limitée au mode de réalisation particulier qui vient d'être décrit mais s'étend à toute variante conforme à son esprit.

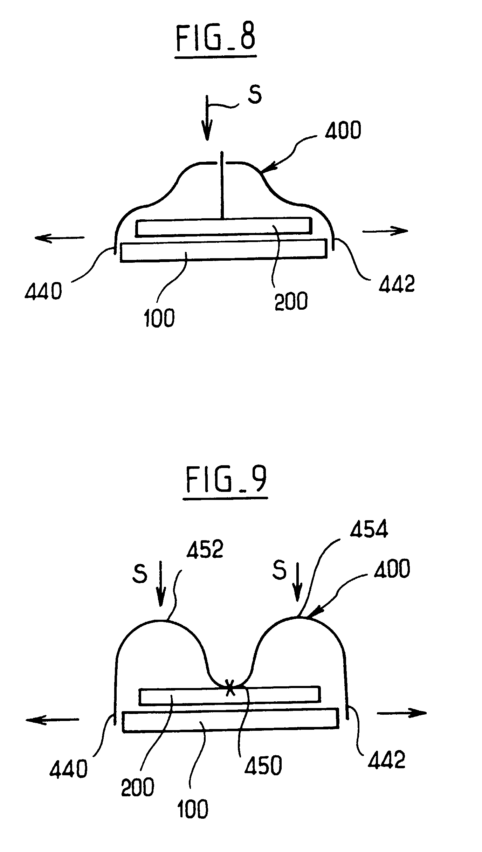

On a illustré par exemple sur la figure 8, une variante de réalisation selon laquelle, la lame 400 conserve une configuration en forme d'arche de sinusoïde dans un plan parallèle à l'axe O-O. Cependant, selon la figure 8, la lame 400 n'est plus reliée à l'élément 200 par l'une de ses extrémités. La lame 400 illustrée sur la figure 8 est au contraire liée radialement à l'élément 200, par sa partie centrale, c'est-à-dire le sommet des arches des branches 410, 412, tout en conservant à ce niveau une liberté de déplacement axiale par rapport à l'élément 200. Les extrémités 440, 442 de la lame 400 constituent ainsi chacune une zone de verrouillage placée en regard de la surface périphérique de l'élément 100. L'homme de l'art comprendra aisément qu'une sollicitation axiale S opérée sur le sommet de la lame 400, lors de l'installation, entraîne une déformation élastique, radialement vers l'extérieur, des deux extrémités 440, 442, pour libérer l'élément 100.

Selon une autre variante illustrée sur la figure 9, la lame 400 possède une forme de omega considérée dans un plan parallèle à l'axe O-O. La lame 400 est fixée sur l'élément 200 par sa partie centrale 450. Il est défini ainsi, respectivement de part et d'autre de cette partie centrale 450, deux zones de sollicitation incurvées 452, 454.

Là encore, de façon comparable à la figure 8, les extrémités 440, 442 de la lame 400 sont placées en regard de la surface périphérique de l'élément 100 et constituent chacune une zone de verrouillage. En effet, ces zones de verrouillage 440, 442, sollicitées élastiquement au repos vers la surface périphérique 102 de l'élément 100 sont déplacées radialement vers l'extérieur, pour libérer l'élément 100, lorsqu'une sollicitation axiale S est exercée sur les zones de sollicitation 452, 454.

Chaque extrémité 440 ,442 de la lame 400 selon les figures 8 et 9 peut être pourvue d'une dent 430 comparable à celle décrite en regard des figures 1 à 7.

Cependant, en variante, la ou les dents de verrouillage 430 peuvent être remplacées, pour l'ensemble des modes de réalisation, par un patin de frottement placé en regard d'une surface périphérique lisse de l'élément 100.

Bien entendu, la lame 400 peut être rendue solidaire de l'élément de boîtier fixe ou de l'élément de boîtier mobile.

Selon le mode de réalisation préférentiel de l'invention, la lame 400 est formée à base d'acier inoxydable, par exemple d'une épaisseur de 0,25 mm.

Par ailleurs, selon les modes de réalisation décrits précédemment, la lame 400 est placée dans une direction générale transversale à l'axe O-O.

En variante cependant, on peut envisager des dispositions généralement axiales de la lame 400, celles-ci ayant toujours au repos une géométrie incurvée, de sorte qu'une sollicitation vers une forme plus aplatie lors de l'installation, entraîne un allongement de la lame 400 entre une zone d'ancrage sur l'un des éléments du boîtier et une zone de verrouillage sur l'autre de ces éléments.

On notera que selon l'invention, la zone de verrouillage 430, 440, 442 s'étend transversalement à la direction d'élongation de la lame 400.

## Revendications

1. Contacteur électrique tournant, notamment pour colonne de direction de véhicules automobiles, comprenant deux éléments (100, 200) susceptibles de rotation relative, un conducteur souple (300) placé entre ces deux éléments et une lame élastique (400) fixée par une zone d'ancrage (418, 420) sur un élément (200) du contacteur et possédant au moins une zone de verrouillage (430) éloignée de la zone d'ancrage et placée en regard du second élément (100), de sorte qu'au repos, en dehors de son environnement d'utilisation, la lame (400) repose sur le second élément (100) pour interdire toute rotation relative entre les éléments (100, 200), tandis qu'en position installée, une sollicitation de la lame (400) par cet environnement écarte celle-ci du second élément (100) pour autoriser une rotation relative,
caractérisé par le fait que la lame (400) possède une forme incurvée de sorte que la sollicitation de la lame (400) par son environnement déforme la lame vers une position plus aplatie, et entraîne un allongement de la distance séparant la zone d'ancrage (418, 420) et la zone de verrouillage (430).

2. Contacteur selon la revendication 1, caractérisé par le fait que la lame (400) possède deux branches (410, 412) symétriques par rapport à un plan axial et concaves vers cet axe.

3. Contacteur selon l'une des revendications 1 ou 2, caractérisé par le fait que la lame (400) s'étend dans une direction générale transversale par rapport à l'axe de rotation (O-O).

4. Contacteur selon l'une des revendications 1 ou 2, caractérisé par le fait que la lame (400) s'étend dans une direction générale parallèle à l'axe de rotation (O-O).

5. Contacteur selon l'une des revendications 1 à 4, caractérisé par le fait que la lame (400) est ancrée sur l'élément (200) associé grâce à des nervures en porte-à-faux (210, 212) prévues sur cet élément pour recevoir la lame (400) et un pion (214) solidaire du même élément (200) et adapté pour être engagé dans un perçage (420) formé sur la lame (400).

6. Contacteur selon l'une des revendications 1 à 5, caractérisé par le fait que l'élément (200) sur lequel est ancré la lame (400) possède des moyens (220, 222) assurant un guidage de la zone de verrouillage (430) de la lame (400) dans son déplacement.

7. Contacteur selon l'une des revendications 1 à 6, caractérisé par le fait que la lame (400) présente une configuration en forme d'arche de sinusoïde considérée dans un plan parallèle à l'axe de rotation (O-O).

8. Contacteur selon la revendication 8, caractérisé par le fait que la lame (400) est fixée sur un élément (200) du boîtier par l'une de ses extrémités (418, 420).

9. Contacteur selon l'une des revendications 1 à 7, caractérisé par le fait que la lame (400) est liée radialement à l'élément (200) associé du boîtier, par sa partie centrale, tout en restant libre de déplacement axial par rapport à ce dernier, de sorte que les deux extrémités (440, 442) de la lame joue le rôle de zones de verrouillage.

10. Contacteur selon l'une des revendications 1 à 6, caractérisé par le fait que la lame (400) possède une forme générale de oméga, qu'elle est fixée par sa partie centrale (450) sur l'élément de boîtier (200) associé, en définissant ainsi deux zones de sollicitation latérale (452, 454), les extrémités (440, 442) de la lame formant des zones de verrouillage en regard de l'autre élément (100).

11. Contacteur selon l'une des revendications 1 à 10, caractérisé par le fait que chaque zone de verrouillage (430) est formée d'une dent et que le second élément de boîtier (100) possède des cannelures (104) aptes à recevoir celle-ci.

12. Contacteur selon l'une des revendications 1 à 10, caractérisé par le fait que chaque zone de verrouillage (430) est formée d'un patin de frottement apte à reposer contre le second élément (100).

13. Contacteur selon l'une des revendications 1 à 12, caractérisé par le fait la zone de verrouillage (430 ; 440 ; 442) s'étend transversalement à la direction d'élongation de la lame (400).

14. Contacteur selon l'une des revendications 1 à 13, caractérisé par le fait que le matériau constitutif de la lame est tel que la lame reprend sa forme initiale lorsque le contacteur est désolidarisé de son environnement d'utilisation.
